# EUROPÄISCHE PATENTSCHRIFT

(11) **EP 2 447 032 B1**
(45) Veröffentlichungstag und Bekanntmachung des Hinweises auf die Patenterteilung: **08.07.2020**
(21) Anmeldenummer: 11405341.6
(22) Anmeldetag: 24.10.2011
(51) Int. Cl.: B29C 43/00, B29C 43/02, B27N 3/04, B27N 3/00, B29C 43/36, B29L 31/44, B27N 3/20, B29K 511/10

(54) **Verfahren zur Herstellung eines Möbelteils**
Method for producing a furniture item
Procédé de fabrication de mobilier

(30) Priorität: 26.10.2010 CH 18012010
(43) Veröffentlichungstag der Anmeldung: 02.05.2012
(73) Patentinhaber: Vitra Patente AG, 4132 Muttenz (CH)
(72) Erfinder: Keller, Stefan, 79585 Steinen /Hofen (DE)
(74) Vertreter: Latscha Schöllhorn Partner AG

(56) Entgegenhaltungen:
- WO-A1-2008/101360
- GB-A- 1 391 296
- JP-A- 2002 316 332
- JP-U- H0 681 704
- US-A- 4 474 846

## Beschreibung

### Anwendungsgebiet der Erfindung

Die Erfindung betrifft ein Verfahren zur Herstellung eines Pressteils in Form eines Möbelteils als Fertigerzeugnis oder als Komponente für ein Fertigerzeugnis.

### Stand der Technik

Möbelteile werden bis dato in einer längeren Abfolge von Arbeitsgängen und mit relativ hohem Materialaufwand hergestellt, was einen wesentlichen Kostenfaktor für das Fertigerzeugnis verursacht.

### Aufgabe der Erfindung

Der Erfindung liegt die Aufgabe zugrunde, ein effizientes Verfahren zur Herstellung eines Möbelteils vorzuschlagen.

### Übersicht über die Erfindung

Das Verfahren zur Herstellung eines Pressteils in Form eines Möbelteils als Fertigerzeugnis oder als Komponente für ein Fertigerzeugnis umfasst folgende Schritte:
a) ein pressfähiges Ausgangswerkstück wird bereitgestellt; und
b) das Ausgangswerkstück wird in einer Pressvorrichtung mit einem ersten Formteil und darin vorhandenen Prägekonturen sowie einem zweiten Formteil mit darin vorhandenen Prägekonturen gepresst, so dass am bearbeiteten Pressteil entstehen:
   - intensiv verdichtete Festigkeitszonen zur Erzeugung einer Steifigkeit des Pressteils; und
   - nicht oder nur geringfügig verdichtete Dämpfungszonen, die somit eine grössere Dicke als die intensiv verdichteten Festigkeitszonen aufweisen, zur Erzeugung intensiv schallschluckender Areale am Pressteil, und
   dadurchgekennzeichnet ist, dass die Formteile aus Segmenten zusammensetzbar sind, um Pressteile verschiedener Dimensionen und mit verschiedenen Anordnungen der Festigkeitszonen und Dämpfungszonen sowie optionalen Rändern und Formzonen herzustellen.

Die nachfolgenden Verfahrensmerkmale beziehen sich auf spezielle Ausführungen der Erfindung: Die Prägekonturen an den Formteilen werden auch zur Herstellung eines intensiv verdichteten Randes am Pressteil zu dessen Steifigkeit genutzt.

Das Ausgangswerkstück besteht im Wesentlichen aus Stofffasern, z.B. einer Mischung aus Woll- und synthetischen Fasern.

Das Ausgangswerkstück wird vor dem Verpressen mit einer Klebeschicht und äusserlich mit einem darüber gelegten Deckbezug versehen.

Vor dem Verpressen wird das Ausgangswerkstück zunächst aufgeheizt, um ein anfängliches Aufschmelzen des Fasermaterials zu erreichen, wobei beim Verpressen eine Abkühlung erfolgt.

Die Pressvorrichtung umfasst ferner ein Oberteil und ein Unterteil, auf das jeweils eines der Formteile aufgespannt ist, wobei das Oberteil und das Unterteil zur Abkühlung genutzt werden.

### Kurzbeschreibung der beigefügten Zeichnungen

Es zeigen:

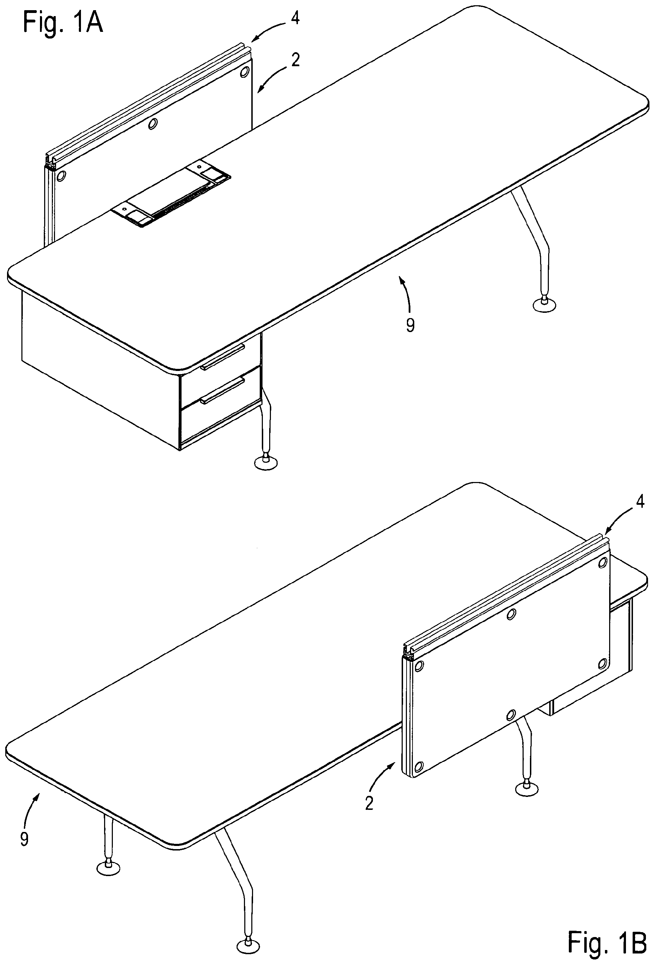

- Figur 1A: - einen Tisch, mit dem erfindungsgemässen daran montierten Möbelteil in Gestalt eines Screens, in perspektivischer Draufsicht;
- Figur 1B: - den Aufbau gemäss Figur 1A, in gewechselter perspektivischer Draufsicht;

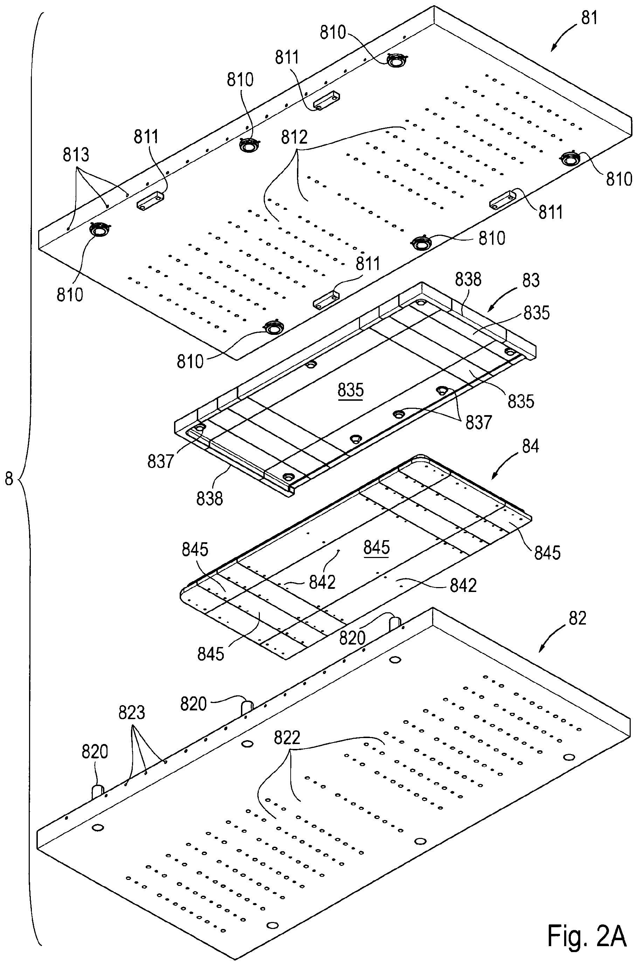

- Figur 2A: - eine Pressvorrichtung, mit Oberteil und Unterteil sowie dazwischen liegendem oberen Formteil und unterem Formteil, in perspektivischer Unteransicht;

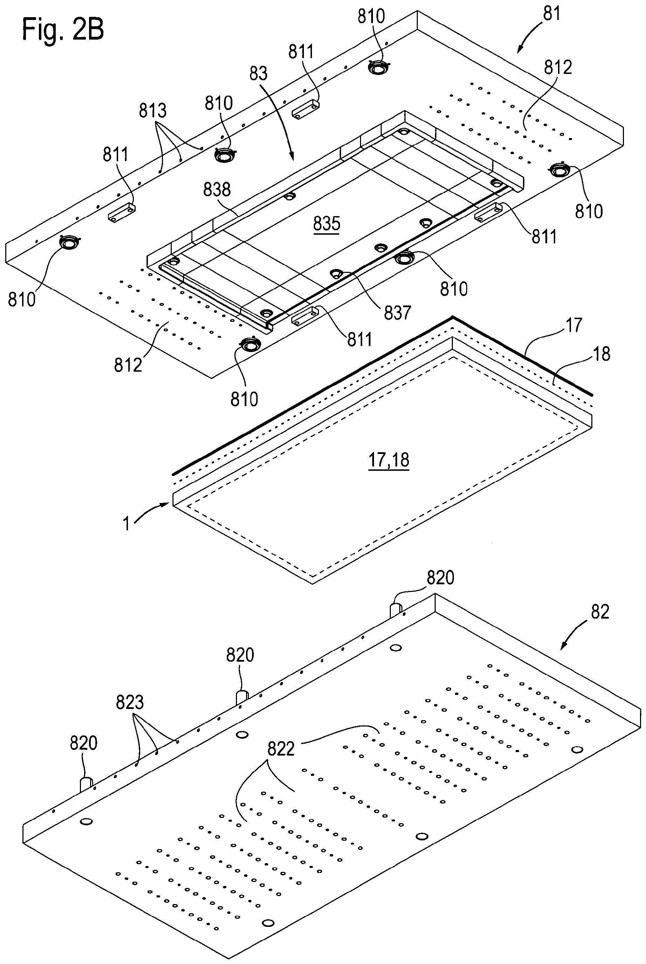

- Figur 2B: - die Pressvorrichtung gemäss Figur 2A, oberes Formteil am Oberteil und unteres Formteil am Unterteil fixiert, und dazwischen liegendes unverpresstes Werkstück, in perspektivischer Unteransicht;

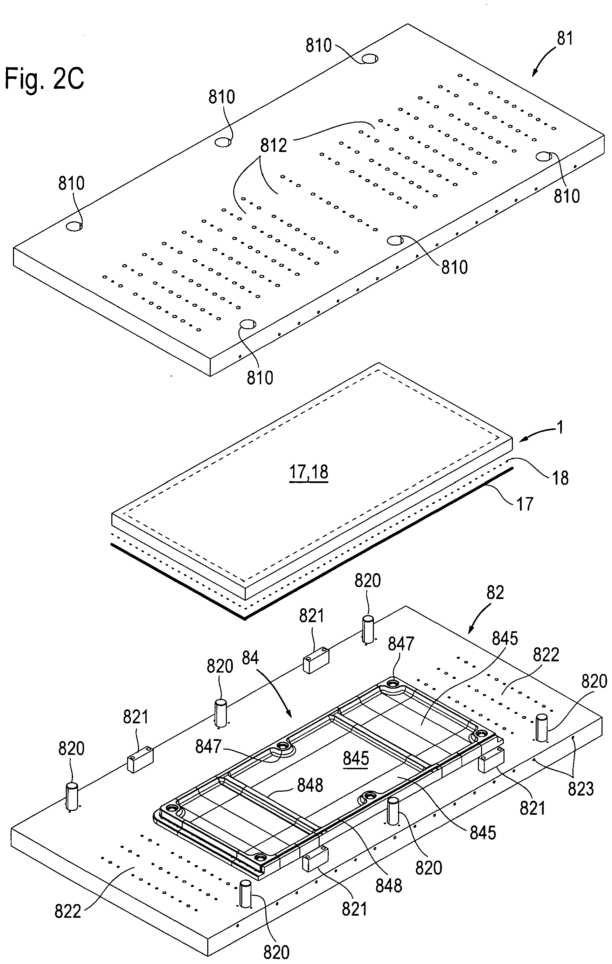

- Figur 2C: - die Pressvorrichtung gemäss Figur 2B, in perspektivischer Draufsicht;

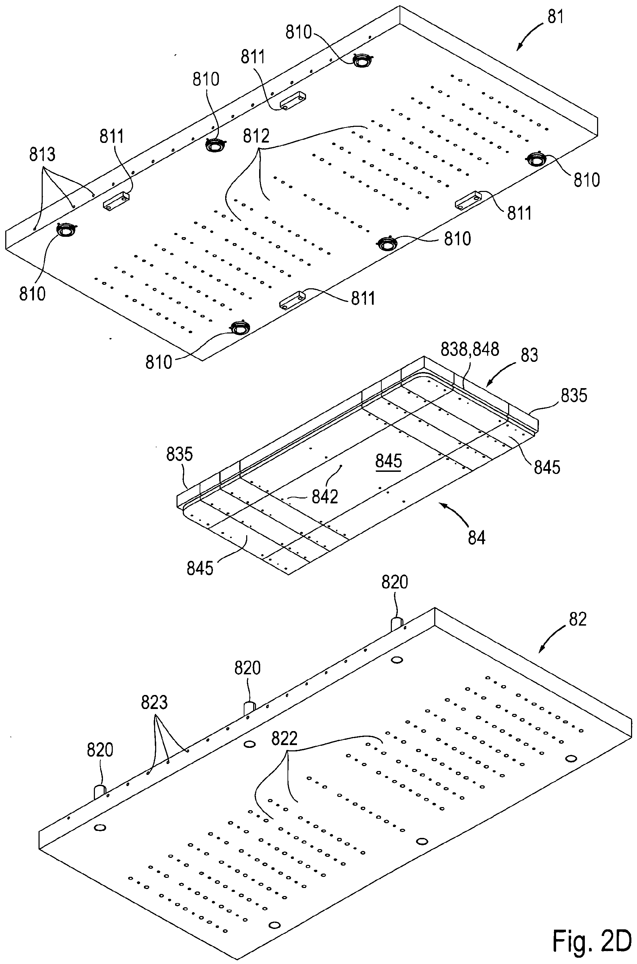

- Figur 2D: - die Pressvorrichtung gemäss Figur 2A, oberes Formteil und unteres Formteil zusammengefügt, in perspektivischer Unteransicht;

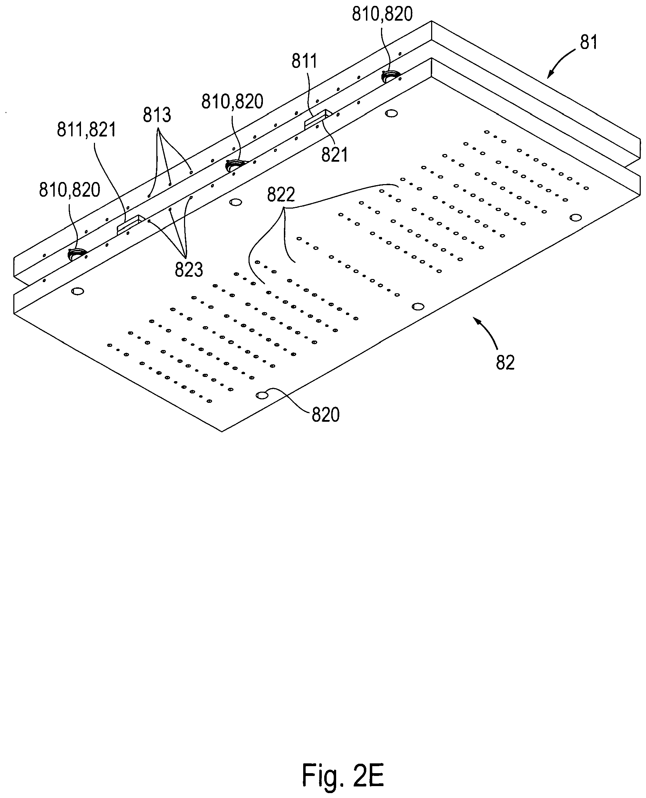

- Figur 2E: - die Pressvorrichtung gemäss Figur 2D, Oberteil und Unterteil zusammengefügt, in perspektivischer Unteransicht;

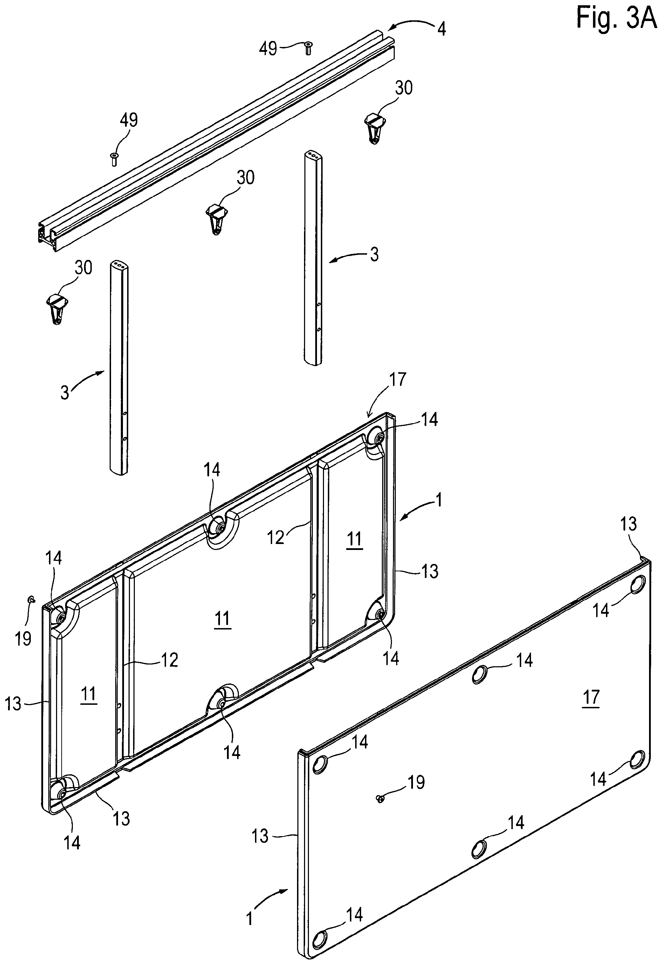

- Figur 3A: - einen kompletten Screen aus Figur 1A, mit Anbau, in perspektivischer Explosivansicht;

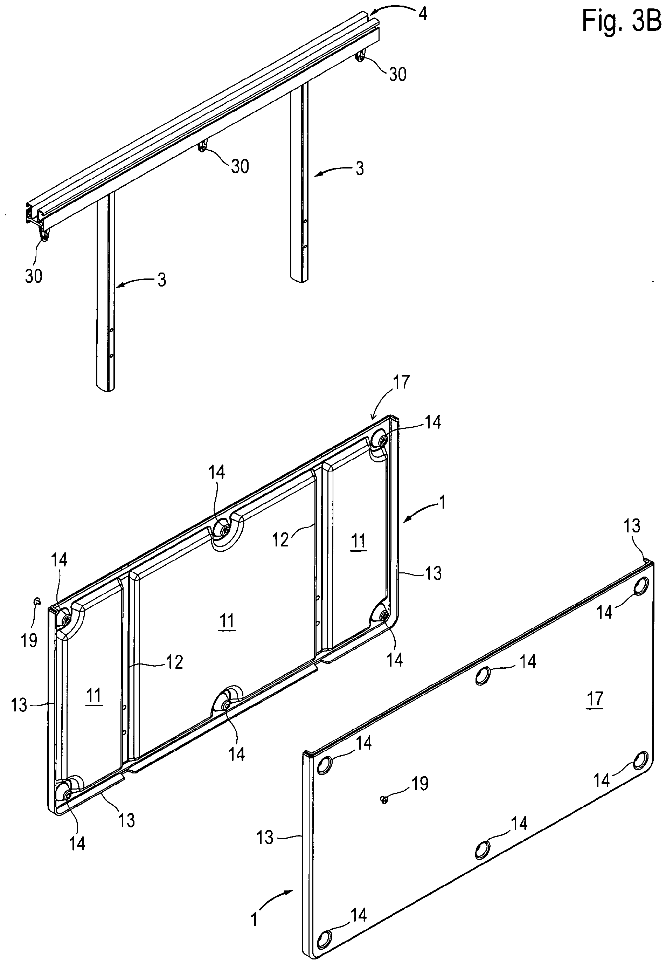

- Figur 3B: - den Aufbau gemäss Figur 3A, in einem *ersten Montageschritt,* in perspektivischer Draufsicht;

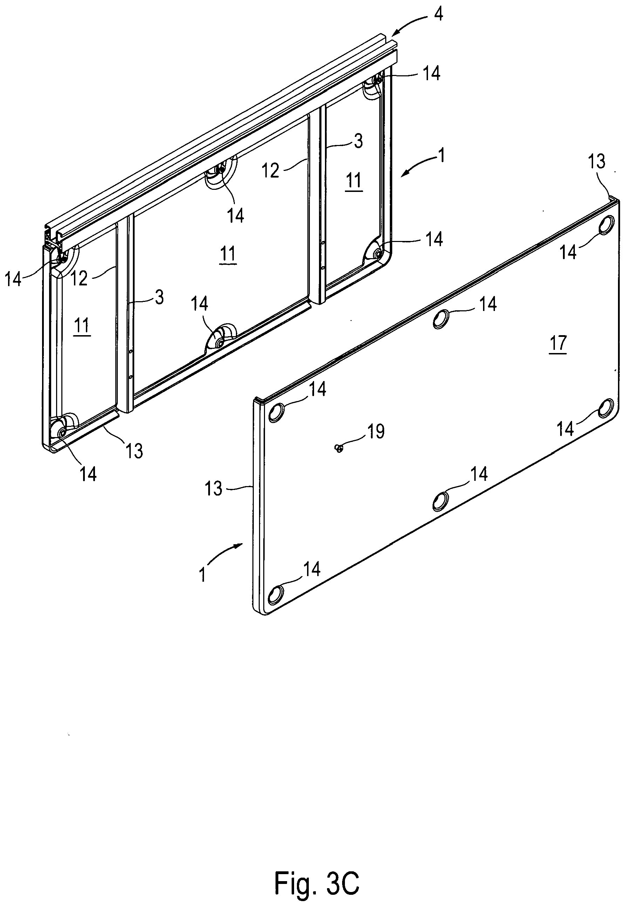

- Figur 3C: - den Aufbau gemäss Figur 3B, in einem *zweiten Montageschritt,* in perspektivischer Draufsicht;

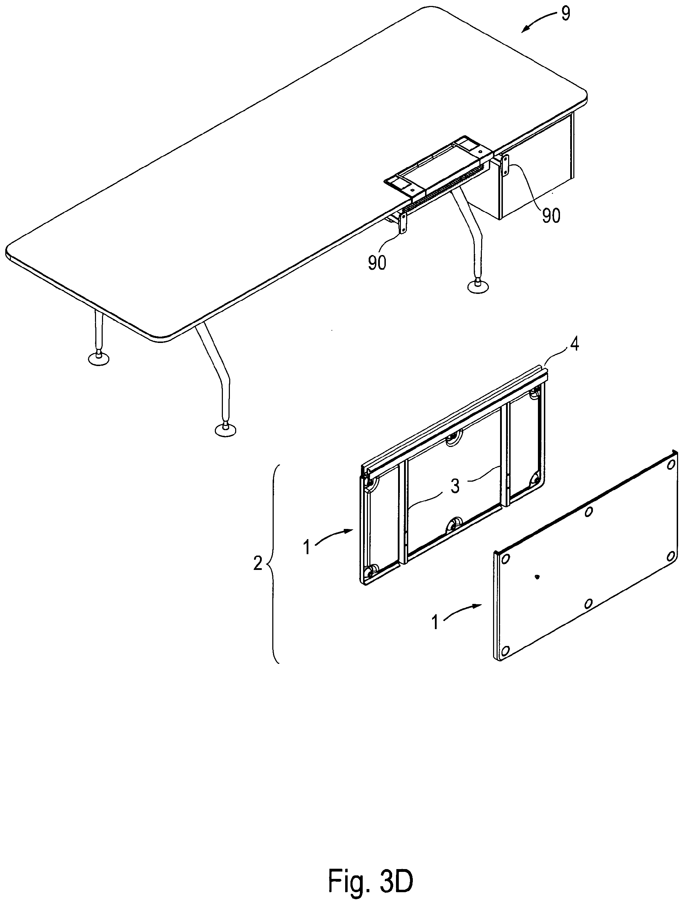

- Figur 3D: - den Aufbau aus Figur 3C, dem Tisch angenähert, in perspektivischer Draufsicht;

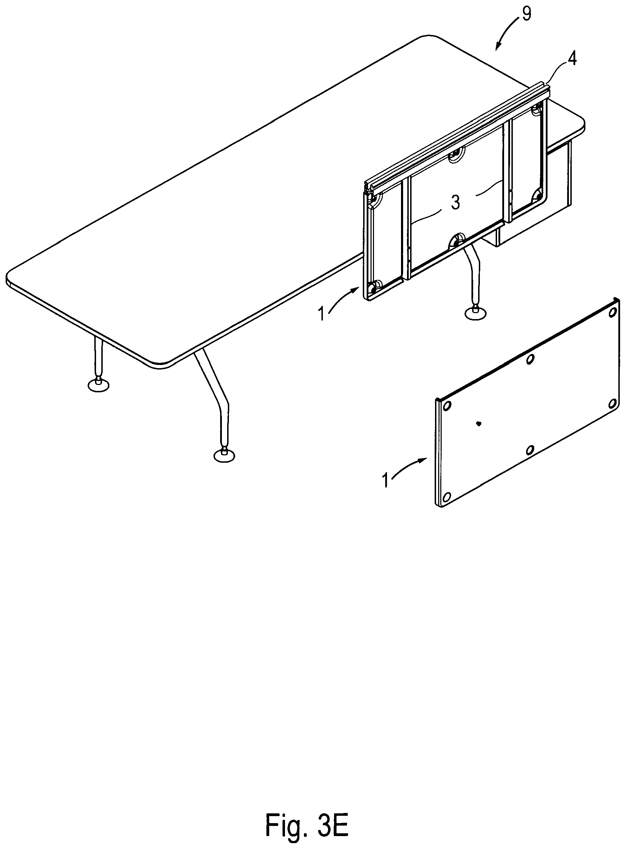

- Figur 3E: - den Aufbau gemäss Figur 3D, mit am Tisch teilweise montiertem Screen, in perspektivischer Draufsicht; und

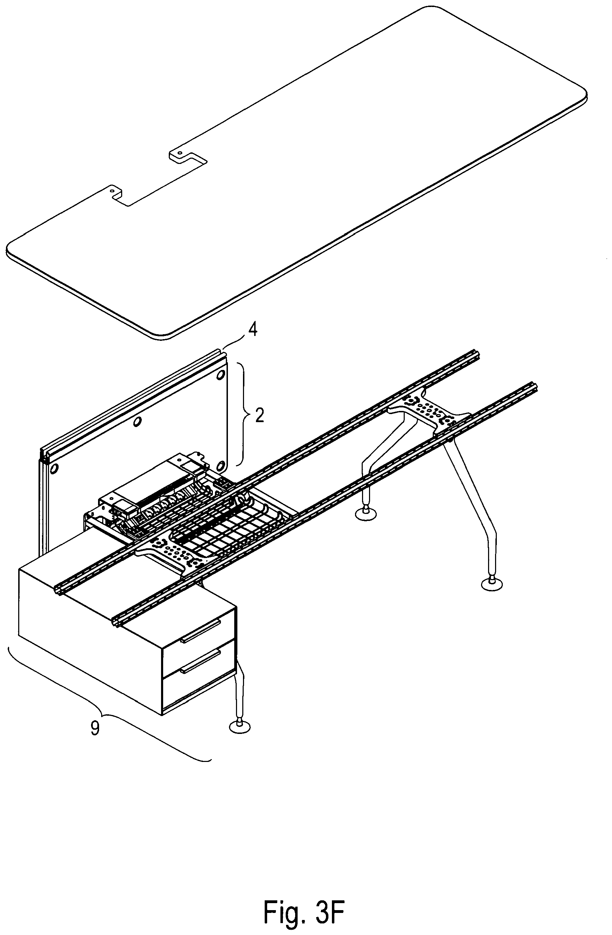

- Figur 3F: - den Aufbau gemäss Figur 3E, mit am Tisch montiertem Screen und vom Tisch abgehobener Tischplatte, in perspektivischer Draufsicht.

### Ausführungsbeispiel

Anhand der beiliegenden Zeichnungen erfolgt nachstehend die detaillierte Beschreibung eines Ausführungsbeispiels zum erfindungsgemässen Herstellungsverfahren eines Möbelteils anhand eines zur Montage an einem Tisch bestimmten Screens.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A und 1B

Am Tisch **9** ist an der vom Benutzer abgewandten Seite ein Fertigerzeugnis **2**, in Gestalt eines Screens, montiert. Ein Anbau **4**, in Form einer Schiene, ist am Fertigerzeugnis **2** befestigt. Der Anbau **4** dient zum Andocken weiterer Elemente, z.B. Einhängen von Behältnissen oder Tablaren.

### Figuren 2A bis 2E

Die rechteckförmige Pressvorrichtung **8** besteht im Wesentlichen aus einem Oberteil **81**, einem Unterteil **82** sowie einem oberen Formteil **83** und einem unteren Formteil **84**. Die Formteile **83**,**84** sind zum Zusammenfügen bestimmt. Im Oberteil **81** sind benachbart zu den Längskanten, zueinander beabstandet, erste Führungsorgane **810** in Form von Hülsen eingebettet. Vom Unterteil **82** erstrecken sich zu den ersten Führungsorganen **810** komplementäre zweite Führungsorgane **820** in Form von Bolzen. Die zweiten Führungsorgane **820** sind zur Aufnahme in den ersten Führungsorganen **810** bestimmt.

Zwischen den ersten Führungsorganen **810** sind am Oberteil **81**, benachbart zu den Längskanten, erste Abstandselemente **811** platziert. Am Unterteil **82** sind zwischen den zweiten Führungsorganen **820**, benachbart zu den Längskanten, zweite Abstandselemente **821** platziert. Die beiden Abstandselemente **811**,**821** liegen sich kongruent gegenüber. Die ersten Abstandselemente **811** haben eine geringere Höhe als die zweiten Abstandselemente **821**, dies ist bedingt durch die ineinander greifenden Formteile **83**,**84**, was nachfolgend beschrieben wird.

Im Oberteil **81** sind erste Schraubenlöcher **812** und im Unterteil **82** sind zweite Schraubenlöcher **821** vorgesehen, wobei die Schraubenlöcher **812** symmetrisch über die Fläche des Oberteils **81** verteilt liegen und zu den Schraubenlöchern **822** im Unterteil **82** deckungsgleich sind.

Im Oberteil **81** sind in den Seitenwandungen zueinander beabstandet erste Kühlkanäle **813** eingelassen, wobei in den Seitenwandungen im Unterteil **82** zueinander beabstandet zweite Kühlkanäle **823** verlaufen.

Das obere Formteil **83** besteht aus mehreren zusammensetzbaren oberen Segmenten **835**, welche an der Oberseite, die dem Oberteil **81** gegenüberliegt, Schraubenlöcher (hier nicht sichtbar) haben, die deckungsgleich zu den ersten Schraubenlöchern **812** im Oberteil **81** sind. Je nach Anzahl der oberen Segmente **835** lässt sich ein oberes Formteil **83** in vorgesehener Dimension realisieren. Die oberen Segmente **835** bzw. das obere Formteil **83** sind über Schrauben anhand der ersten Schraubenlöcher **812** mit dem Oberteil **81** verbunden. Die oberen Segmente **835** bzw. das obere Formteil **83** besitzen eine erste Prägekontur **837** und eine zweite Prägekontur **838**.

Das untere Formteil **84** besteht aus mehreren unteren Segmenten **845**, welche an der Unterseite, die dem Unterteil **82** gegenüberliegt, vierte Schraubenlöcher **842** haben, die deckungsgleich zu den zweiten Schraubenlöchern **822** im Unterteil **82** sind. Je nach Anzahl der unteren Segmente **845** lässt sich ein unteres Formteil **84** mit konzipierter Grösse realisieren. Die unteren Segmente **845** bzw. das untere Formteil **84** sind über Schrauben anhand der zweiten Schraubenlöcher **822** mit dem Unterteil **82** verbunden. Die unteren Segmente **845** bzw. das untere Formteil **84** besitzen eine dritte Prägekontur **847** und eine vierte Prägekontur **848**.

Vor dem Pressvorgang wird das Pressteil **1**, welches beidseits einen Deckbezug **17** hat und dazwischen mit einer Klebeschicht **18** versehen ist, aufgeheizt, was eine Aktivierung der Klebeschicht **18** und ein leichtes Anschmelzen des Materials des Pressteils **1** bewirkt. Beim Einfügen des Pressteils **1** zwischen den Formteilen **83**,**84** erfolgt über das Ober- und Unterteil **81**,**82** durch Beschicken der jeweiligen Kühlkanäle **813**,**823** eine Abkühlung des Pressteils **1**. Eine Seite des Deckbezugs **17** liegt auf den das untere Formteil **84** bildenden unteren Segmenten **845** sowie den Prägekonturen **847**,**848** auf. Beim Zusammenfahren von Oberteil **81** und Unterteil **82** werden die zweiten Führungsorgane **820** in den ersten Führungsorganen **810** gleitend aufgenommen. Die ersten Prägekonturen **837** und zweiten Prägekonturen **838** des oberen Formteils **83** sowie die dritten Prägekonturen **847** und vierten Prägekonturen **848** des unteren Formteils **84** werden auf das dazwischen eingespannte Pressteil 1 übertragen. Durch die entsprechenden Prägekonturen **837**,**847**,**838**,**848** erhält das zuvor rohe Pressteil **1** während des Pressvorgangs seine jeweilige Form.

### Figuren 3A bis 3F

Das Pressteil **1** hat die Form, welche durch die jeweiligen zwei Formteile **83**,**84** vorgegeben wird und besitzt einen intensiv verpressten umlaufenden Rand **13**, der zur Steifigkeit und Montage des späteren Fertigerzeugnisses **2** beiträgt. Am bearbeiteten Pressteil **1** sind ferner sich über das Pressteil **1** erstreckende Festigkeitszonen **12** entstanden, die ähnlich dem Rand **13** intensiv verpresst von geringer Materialhöhe sind und z.B. der Aufnahme von Halterungen **3** dienen. Diese Festigkeitszonen **12** tragen zur Steifigkeit des späteren Fertigerzeugnisses **2** bei. In den Randbereichen sind verdichtete Formzonen **14** als Mulden für Verschraubungen entstanden. Die übrigen Areale am Pressteil **1** sind nur geringfügig verdichtet und weisen daher eine deutlich grössere Dicke auf, um als Dämpfungszonen **11** schallschluckend zu wirken sowie das Einstechen von Pins zu ermöglichen.

Der als beispielhaftes Fertigerzeugnis **2** hergestellte Screen besteht aus zwei miteinander kongruenten Pressteilen **1**. Zur Montage wird der schienenartige Anbau **4** mit den Verbindern **30** und den strebenförmigen Halterungen **3** zusammengefügt. Anschliessend wird die Einheit aus Anbau **4**, Verbindern **30** und Halterungen **3** so mit den Pressteilen **1** verbunden, dass der Anbau **4** auf der Oberseite beider aneinander gefügter Pressteile **1** zu liegen kommt, die Verbinder **30** in die Formzonen **14** für die spätere Verschraubung **19** ragen und die Halterungen **3** in den dafür geformten Festigkeitszonen **12** sitzen. Schrauben **49** dienen der Verbindung zwischen dem Anbau **4** und den Halterungen **3**. Im weiteren Montageablauf wird das mit dem Anbau **4**, den Verbindern **30** und den Halterungen **3** versehene Pressteil **1** an den Haltern **90** des Tisches **9** verschraubt. Schliesslich wird das zweite bisher lose geformte Pressteil **1** an das zuvor am Tisch **9** montierte Pressteil **1** aufgesetzt.

## Patentansprüche

1. Verfahren zur Herstellung eines Pressteils (**1**) in Form eines Möbelteils als Fertigerzeugnis (**2**) oder als Komponente für ein Fertigerzeugnis (**2**), umfassend folgende Schritte:
a) ein pressfähiges Ausgangswerkstück (**1**) wird bereitgestellt; und
b) das Ausgangswerkstück (**1**) wird in einer Pressvorrichtung (**8**) mit einem ersten Formteil (**83**) und darin vorhandenen Prägekonturen (**837**,**838**) sowie einem zweiten Formteil (**84**) mit darin vorhandenen Prägekonturen (**847**,**848**) gepresst, so dass am bearbeiteten Pressteil (**1**) entstehen:
c) intensiv verdichtete Festigkeitszonen (**12**) zur Erzeugung einer Steifigkeit des Pressteils (**1**); und
d) nicht oder nur geringfügig verdichtete Dämpfungszonen (**11**), die somit eine grössere Dicke als die intensiv verdichteten Festigkeitszonen (**12**) aufweisen, zur Erzeugung intensiv schallschluckender Areale am Pressteil (**1**)
e) **dadurch gekennzeichnet, dass** die Formteile (**83**,**84**) aus Segmenten (**835**,**845**) zusammensetzbar sind, um Pressteile (**1**) verschiedener Dimensionen und mit verschiedenen Anordnungen der Festigkeitszonen (**12**) und Dämpfungszonen (**11**) sowie optionalen Rändern (**13**) und Formzonen (**14**) herzustellen.

2. Verfahren nach Anspruch 1, **dadurch gekennzeichnet, dass** die Prägekonturen (**838**,**848**) an den Formteilen (**83**,**84**) auch zur Herstellung eines intensiv verdichteten Randes (**13**) am Pressteil (**1**) zu dessen Steifigkeit genutzt werden.

3. Verfahren nach einem der Ansprüche 1 und 2, **dadurch gekennzeichnet, dass** das Ausgangswerkstück (**1**) im Wesentlichen aus Stofffasern besteht, z.B. einer Mischung aus Woll- und synthetischen Fasern.

4. Verfahren nach einem der Ansprüche 1 bis 3, **dadurch gekennzeichnet, dass** das Ausgangswerkstück (**1**) vor dem Verpressen mit einer Klebeschicht (**18**) und äusserlich mit einem darüber gelegten Deckbezug (**17**) versehen wird.

5. Verfahren nach einem der Ansprüche 1 bis 4, **dadurch gekennzeichnet, dass** vor dem Verpressen das Ausgangswerkstück (**1**) zunächst aufgeheizt wird, um ein anfängliches Aufschmelzen des Fasermaterials zu erreichen, und beim Verpressen eine Abkühlung erfolgt.

6. Verfahren nach einem der Ansprüche 1 bis 5, **dadurch gekennzeichnet, dass** die Pressvorrichtung (**8**) ferner ein Oberteil (**81**) und ein Unterteil (**82**) umfasst, auf das jeweils eines der Formteile (**83**,**84**) aufgespannt ist, und dass das Oberteil (**81**) und das Unterteil (**82**) zur Abkühlung genutzt werden.

## Claims

1. Method of manufacturing a press piece (**1**) in the form of a furniture piece as manufacturing product (**2**) or in the form of a component of a manufacturing product (**2**) comprising the following steps:
a) providing a pressable starting workpiece (**1**); and
b) the starting workpiece (**1**) being pressed in a pressing device (**8**) with a first mold (**83**) being equipped with embossing contours (**837**, **838**) and a second mold (**84**) being equipped with embossing contours (**847**,**848**), so that the processed press piece (**1**) is provided with:
c) intensively compacted strength zones (**12**) for generating stiffness of the press piece (**1**); and
d) not or slightly compacted damping zones (**11**), which as a result thereof have a greater thickness than the intensively compacted strength zones (12), for the creation of intensively sound-absorbing areas on the press piece (**1**),
e) **characterised in that** the molds (**83**,**84**) are assemblage of segments (**835**,**845**) in order to manufacture press pieces (**1**) of different dimensions and with different arrangements of strength zones (**12**) and damping zones (**11**) as well as, optionally, edges (**13**) and form zones (**14**).

2. Method according to claim 1, **characterised in that** the embossing contours (**838**,**848**) on the molds (**83**,**84**) are also used for the manufacture of intensively compacted edges (**13**) on the press piece (**1**) for its stiffness.

3. Method according to one of claims 1 and 2, **characterised in that** the starting workpiece (**1**) consists essentially of fabric fibres e.g. a mixture of wool and synthetic fibres.

4. Method according to one of claims 1 to 3, **characterised in that** the starting workpiece (**1**) is provided with an adhesive layer (**18**) and provided with an externally placed cover (**17**) before being pressed.

5. Method according to one of claims 1 to 4, **characterised in that** before being pressed the starting workpiece (**1)** is initially heated up in order to achieve an inital melting of the fibrous material, and that during pressing cooling down takes place.

6. Method according to one of claims 1 to 5, **characterised in that** the pressing device (**8**) further comprises a upper part (**81**) and a lower part (**82**), on each of which one of the molds (**83**,**84**) is put respectively, and that the upper part (**81**) and the lower part (**82**) are used for cooling.

## Revendications

1. Procédé pour la fabrication d'un élément pressé (1) sous la forme d'un élément de meuble comme produit fini (2) ou comme composant pour un produit fini (2), comprenant les étapes suivantes :
a) mise à disposition d'une pièce de départ (1) pouvant être pressée ; et
b) pressage de la pièce de départ (1) dans un dispositif de pressage (8) avec un premier élément de moule (83) et des contours d'estampage (837, 838) présents dans celui-ci, ainsi qu'un second élément de moule (84) avec des contours d'estampage (847, 848) présents dans celui-ci, de manière à former, sur l'élément pressé traité (1) :
c) des zones de résistance (12) intensivement compactées, pour produire une rigidité de l'élément pressé (1) ; et
d) des zones d'amortissement (11) non compactées ou seulement faiblement compactées, qui présentent ainsi une plus grande épaisseur que les zones de résistance (12) intensivement compactées, pour produire des régions d'absorption acoustique intensive sur l'élément pressé (1)
e) **caractérisé en ce que** les éléments de moule (83, 84) peuvent être assemblés à partir de segments (835, 845) afin de fabriquer des éléments pressés (1) de différentes dimensions et avec différentes dispositions des zones de résistance (12) et des zones d'amortissement (11) ainsi que des bords (13) facultatifs et des zones de moulage (14) facultatives.

2. Procédé selon la revendication 1, **caractérisé en ce que** les contours d'estampage (838, 848) sur les éléments de moule (83, 84) sont également utilisés pour fabriquer un bord (13) intensivement compacté sur l'élément pressé (1) pour la rigidité de celui-ci.

3. Procédé selon l'une des revendications 1 et 2, **caractérisé en ce que** la pièce de départ (1) est essentiellement constituée de fibres textiles, par exemple d'un mélange de laine et de fibres synthétiques.

4. Procédé selon l'une des revendications 1 à 3, **caractérisé en ce que** la pièce de départ (1) est pourvue, avant le pressage, d'une couche adhésive (18) et extérieurement d'un couvercle (17) placé par-dessus.

5. Procédé selon l'une des revendications 1 à 4, **caractérisé en ce qu'**avant le pressage, la pièce de départ (1) est d'abord chauffée afin d'obtenir une première fusion de la matière fibreuse, et **en ce qu'**un refroidissement est effectué pendant le pressage.

6. Procédé selon l'une des revendications 1 à 5, **caractérisé en ce que** le dispositif de pressage (8) comprend en outre une partie supérieure (81) et une partie inférieure (82), sur chacune desquelles l'un des éléments de moule (83, 84) est serré, et **en ce que** la partie supérieure (81) et la partie inférieure (82) sont utilisées pour le refroidissement.
